# EUROPÄISCHE PATENTANMELDUNG

(11) **EP 3 992 377 A1**
(43) Veröffentlichungstag der Anmeldung: **04.05.2022**
(21) Anmeldenummer: 21000301.8
(22) Anmeldetag: 26.10.2021
(51) Int. Cl.: E03C 1/08, B05B 1/30, E03C 1/10, F16K 15/06, G05D 7/01, B67D 1/00

(54) **STRAHLREGLEREINSATZ MIT RÜCKVERKEIMUNGSSCHUTZ**

(30) Priorität: 02.11.2020 DE 202020004593 U; 10.11.2020 DE 202020004716 U; 30.04.2021 DE 202021001590 U; 18.10.2021 DE 202021003227 U
(71) Anmelder: Henschel, Dietmar, 44653 Herne (DE)
(72) Erfinder: Henschel, Dietmar, 44653 Herne (DE)
(74) Vertreter: Gallo, Wolfgang

(57) **Zusammenfassung**

Strahlreglereinsatz zum Einsetzen in ein als Einschraubhülse oder Aufschraubhülse ausgebildetes Auslaufmundstück für einen sanitären Wasserauslauf oder den Auslauf eines Wasser/Getränkespenders, mit einem Gehäuse (1) und darin angeordneten Komponenten zur Regelung des austretenden Wasser- oder Flüssigkeitsstrahls, der mit einem Rückverkeimungsschutz in Gestalt eines Schließventils ausgebildet ist, das zwischen einem Vorsatzsieb (4) oder einer mit einer mittigen Öffnung (41) versehenen Deckwand (40) und einem darunter befindlichen Bauteil des Strahlreglereinsatzes angeordnet ist und einen Ventilkörper (51, 61, 71, 81, 9) aufweist, der mittels Federkraft entgegen der Strömungsrichtung des Wassers oder der Flüssigkeit in eine Schließstellung vorgespannt ist, in welcher er bei fehlendem Strömungsdruck des Wassers oder der Flüssigkeit mit einem umfangsmäßigen Randbereich abdichtend an einem nicht mit Sieböffnungen versehenen Randbereich des Vorsatzsiebs (4) oder dem Öffnungsrand der Deckwand (40) anliegt, und der bei vorhandenem Strömungsdruck des Wassers oder der Flüssigkeit entgegen der vorspannenden Federkraft vom Vorsatzsieb (4) oder der Deckwand (40) weg in eine Offenstellung auslenkbar ist.

## Beschreibung

Die Erfindung betrifft einen Strahlreglereinsatz mit Rückverkeimungsschutz zum Einsetzen in ein als Einschraubhülse oder Aufschraubhülse ausgebildetes Auslaufmundstück für einen sanitären Wasserauslauf oder den Auslauf eines Getränkeautomaten oder eines Sodawasserspenders zum Zapfen von Wasser/Getränken. Der Strahlreglereinsatz kann dabei ein normaler Strahlreglereinsatz zur Erzeugung eines nicht spritzenden Strahls an einem sanitären Wasserauslauf oder ein Weichstrahlereinsatz sein.

In der folgenden Beschreibung ist daher mit dem Begriff "Wasser" nicht nur Wasser gemeint, sondern auch jede andere Art von wässriger Flüssigkeit, wie sie bei Getränken vorliegt, die aus Getränkeautomaten gezapft werden kann.

Bei einem sanitären Wasserauslauf oder dem Auslauf eines Getränkeautomaten oder Sodawasserspenders kann es zu einer unerwünschten und gefährlichen verstärkten Verkeimung im Wasserleitungsnetz oder im Getränkeautomaten oder Sodawasserspender kommen, ausgelöst durch eine Rückverkeimung, die durch den Strahlreglereinsatz erfolgt. Diese Gefahr besteht insbesondere in Krankenhäusern, Altenheimen und sonstigen sensiblen hygienischen Bereichen, und eine Verkeimung kann insbesondere passieren, wenn kranke Patienten den Strahlregler am Auslauf berühren oder Putzkräfte die Armaturen mit verkeimten Putzlappen abwischen. Auch bei Sodawasserspendern, die in öffentlichen Bereichen aufgestellt sind, und Getränkeautomaten besteht die Gefahr einer Verkeimung durch Berühren des Auslaufs durch Personen mit unsauberen Händen oder Abwischen mit unsauberen Putzlappen.

Eine solche Rückverkeimung entsteht normalerweise bei stagnierendem Wasser im Auslauf und wandert dann vom Strahlregler aus in das Leitungsnetz oder in den Sodawasser- oder Getränkebehälter zurück. Wenn solche Rückverkeimungen auftreten, entstehen dadurch den Betreibern oder den Trägerorganisationen der betreffenden Häuser erheblicher Schäden durch Kosten, die für ein häufiges Durchspülen und Desinfizieren anfallen.

Es ist zwar bekannt, eine solche Rückverkeimung durch handelsübliche Rückschlagventile zu unterbinden, die vor dem Strahlregler in den Auslauf eingebaut werden, und die einen durch eine Druckfeder in Schließrichtung vorgespannten Ventilkörper haben, der schließt, wenn der Wasserfluss durch Schließen des Auslaufventils aufhört. Das hat aber den Nachteil, dass der Auslauf dadurch entsprechend lang wird. Bei sanitären Wasserausläufen wird dadurch der Abstand zum Waschbecken verringert. Dies erschwert die Benutzung des Wasserauslaufs sowohl zum Händewaschen als auch zum Füllen von Gefäßen und ist daher unpraktisch.

Aufgabe der Erfindung ist es daher, eine bessere Möglichkeit zur Vermeidung einer Rückverkeimung in das Wassernetz ohne eine unerwünschte Verlängerung von Auslaufarmaturen durch ein vor dem Auslauf eingebautes federbetätigtes Rückschlagventil zu vermeiden, und außerdem eine Möglichkeit zu schaffen, auch bei bestehenden Ausläufen ohne ein solches vorgebautes Rückschlagventil auf einfachste Weise eine Vermeidung einer Rückverkeimung herbeizuführen.

Diese Aufgabe wird gemäß der Erfindung durch einen Strahlreglereinsatz mit Rückverkeimungsschutz in Gestalt eines integrierten, durch Federkraft betätigtes Schließventil gelöst, wie er im Anspruch 1 definiert und gemäß den Unteransprüchen vorteilhaft ausgestaltet ist. Das Schließventil wird durch Federkraft in seine Schließstellung bewegt, wenn kein Fließdruck des Wassers vorhanden ist, und wird bei fließendem Wasser durch den Fließdruck des Wassers in seine Offenstellung bewegt.

Einige Ausführungsbeispiele der Erfindung werden nachstehend unter Bezugnahme auf die anliegenden Zeichnungen mehr im einzelnen erläutert, in denen zeigt:
- Fig. 1: eine erste Ausführungsform eines Strahlreglereinsatzes nach der Erfindung bei fließendem Wasser,
- Fig. 2: den Strahlreglereinsatz nach Fig. 1 bei stehendem Wasser,
- Fig. 3: eine weitere Ausführungsform eines Strahlreglereinsatzes bei fließendem Wasser,
- Fig. 4: eine ähnliche Ausführungsform wie nach Fig. 3 bei stehendem Wasser,
- Fig. 5: eine weitere Ausführungsform eines Strahlreglereinsatzes bei stehendem Wasser,
- Fig. 6: die Ausführungsform nach Fig. 5 bei fließendem Wasser,
- Fig. 7: eine weitere Ausführungsform eines Strahlreglereinsatzes mit Membranventil bei fließendem Wasser,
- Fig. 7a: das Membranventil der Ausführungsform nach Fig. 7 im Öffnungszustand,
- Fig. 8: die Ausführungsform nach Fig. 7 bei stehendem Wasser,
- Fig. 8a: das Membranventil der Ausführungsform nach Fig. 7 im Schließzustand,
- Fig. 9: eine Ausführungsform eines Weichstrahlereinsatzes nach der Erfindung mit flächig dichtendem Rückschlagventil bei fließendem Wasser,

- Fig. 10: den Weichstrahlereinsatz nach Fig. 9 bei stehendem Wasser,
- Fig. 11: eine weitere Ausführungsform eines Weichstrahlereinsatzes mit konisch dichtendem Rückschlagventil bei fließendem Wasser,
- Fig. 12: den Weichstrahlereinsatz nach Fig. 11 bei stehendem Wasser,
- Fig. 13: eine weitere Ausführungsform eines Weichstrahlereinsatzes, bei welcher der Ventilkörper mit einem integrierten Entspannungtopf ausgebildet ist, bei stehendem Wasser, und
- Fig. 14: den Weichstrahlereinsatz nach Fig.13 bei fließendem Wasser.

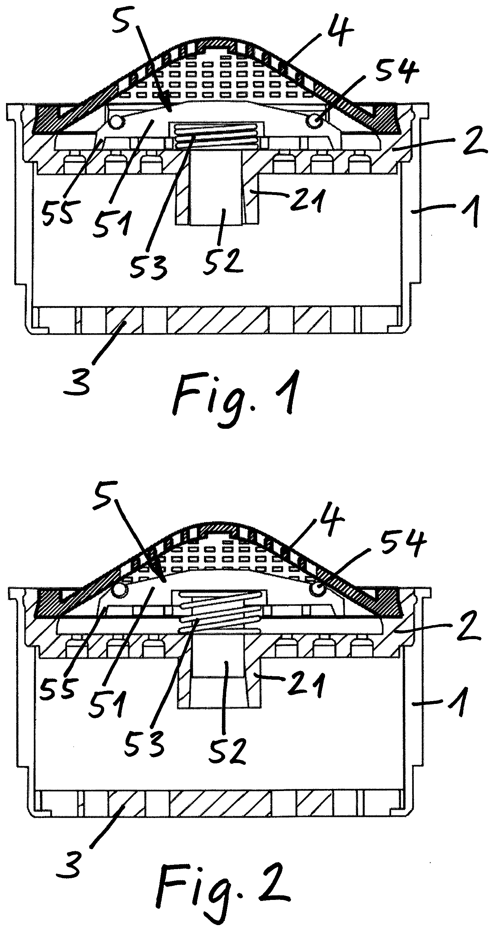

Bei den in den Fig. 1 bis 8a dargestellten Ausführungsbeispielen ist jeweils ein Strahlreglereinsatz, wie er üblicherweise bei sanitären Wasserausläufern benutzt wird, nur schematisch im Axialschnitt dargestellt mit einem Gehäuse 1, einem Einbauteil, nämlich beispielsweise einem Strahlzerleger 2, und einem Auslaufgitter 3 sowie einem Vorsatzsieb 4 am zuströmseitigen Ende. Sonstige Einbauteile oder Einzelheiten des Strahlreglereinsatzes, die je nach bedarfsorientierter Ausgestaltung variabel sein können, sind in den Zeichnungen nicht dargestellt.

Bei allen Ausführungsformen ist zwischen dem Strahlzerleger 2 und dem Vorsatzsieb 4 ein Schließventil 5 eingebaut, das bei geöffneter Wasserauslaufarmatur durch den Strömungsdruck des fließenden Wassers in seine Offenstellung gebracht wird und bei geschlossener Wasserauslaufarmatur durch Federkraft in eine Schließstellung bewegt wird, in welcher das Schließschlagventil 5 sich dichtend an die Innenwandung des radial äußeren Bereichs des Vorsatzsiebs 4 anlegt, der nicht mit Sieböffnungen versehen ist.

Bei der Ausführungsform nach den Fig. 1 und 2 besteht das Schließventil 5 aus einem Ventilkörper 51 mit einem zapfenförmigen Schaft 52, der axial verschieblich in einer am Strahlzerleger 2 angeformten Hülse 21 geführt ist. Eine um den Schaft 52 herum verlaufende Spiralfeder 53 ist als Druckfeder ausgebildet und zwischen der Oberseite des Strahlzerlegers 2 und der Unterseite des Ventilkörpers 51 angeordnet und drückt den Ventilkörper 51 entgegen der Strömungsrichtung des Wassers stromaufwärts in Richtung zum Vorsatzsieb 4. Im Umfangsbereich des Ventilkörpers 51 ist an dessen dem Vorsatzsieb 4 zugewandten Vorderseite ein Dichtungsring 54 eingelegt.

Fig. 1 zeigt die Stellung des Schließventils 5 bei Wasserdurchfluss, in welcher der Ventilkörper 5 durch den Strömungsdruck des Wassers entgegen der Vorspannkraft der Feder 53 vom Vorsatzsieb 4 weggedrückt ist und die Wasserströmung durch den Strahlreglereinsatz ermöglicht. Der Ventilkörper 51 hat an seiner rückwärtigen, dem Strahlzerleger 2 zugewandten Unterseite entlang seines Umfangs angeordnete und umfangsmäßig beabstandete Vorsprünge 55, die sich in der in Fig. 1 gezeigten Öffnungsstellung auf dem Strahlzerleger 2 abstützen können und durch die zwischen ihnen liegenden Zwischenräume Wasser auch zum radial inneren Bereich des Strahlzerlegers 2 einströmen lassen.

Fig. 2 zeigt die Schließstellung des Schließventils 5 bei stehendem Wasser, also geschlossener Wasserauslaufarmatur, in welcher kein Strömungsdruck vorhanden ist und deshalb die Feder 53 den Ventilkörper 51 stromaufwärts gegen die Innenseite des Vorsatzsiebs 4 drückt, so dass der Ventilkörper 51 über den Dichtungsring 54 an der Unterseite des Vorsatzsiebs 4 anliegt und mit diesem abdichtet. Dadurch wird eine Rückverkeimung in einem Bereich stromauf des Vorsatzsiebs 4 verhindert. Wird die Wasserauslaufarmatur wieder geöffnet und findet eine Wasserströmung statt, wird der Bereich stromab des Vorsatzsiebs 4 von dem fließenden Wasser durchgespült, und etwa in diesem Bereich vorhandene Keime werden ausgespült.

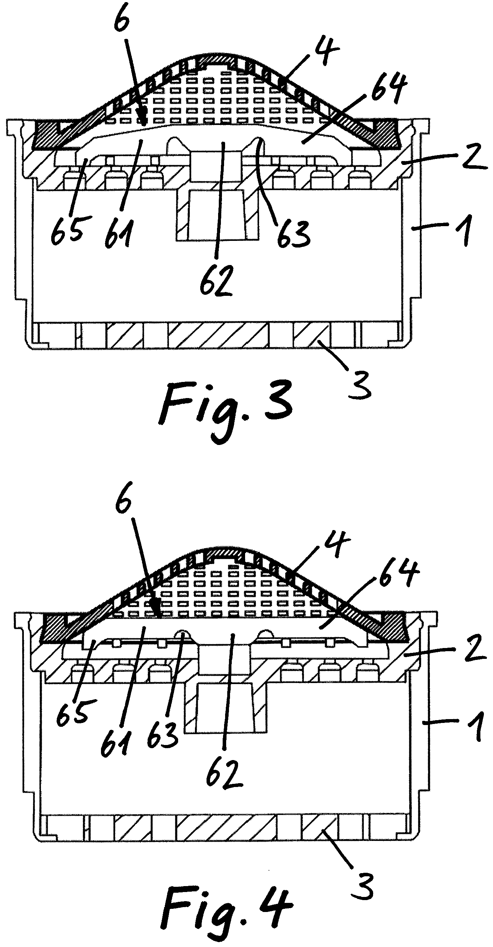

Bei der weiteren Ausführungsform nach Fig. 3 ist ein Schließventil 6 mit einem in sich elastischen Ventilkörper 61 ausgebildet, dessen Zentralbereich 62 mit dem Strahlzerleger 2 verbunden ist. Der Ventilkörper 61 ist mit einee um den Zentralbereich 62 herum verlaufende, an seiner dem Strahlzerleger 2 zugewandten Unterseite eingeformten Ringnut 63 mit gerundetem Nutgrund ausgebildet, welche den Ventilkörper 61 in den Zentralbereich 62 und einen radial außerhalb der Ringnut 63 befindlichen äußeren Bereich 64 unterteilt. Die Ringnut 63 erzeugt eine Querschnittsschwächung zwischen dem Zentralbereich 62 und dem äußeren Teil 64 des Ventilkörpers, die als elastisches Gelenk wirkt und daher eine elastische Auslenkung des äußeren Teils 64 relativ zum Zentralbereich 62 ermöglicht. Findet daher bei geöffneter Wasserauslaufarmatur eine Wasserströmung statt, bleibt der Zentralbereich 62 des Ventilkörpers 61 wegen seiner festen Verbindung mit dem oder Abstüzung auf dem Strahlzerleger 2 zwar ortsfest, aber der radial äußere Teil 64 wird unter dem Strömungsdruck des Wassers um die als Gelenk wirkende Querschnittsschwächung durch die Ringnut 63 vom Vorsatzsieb 4 weg ausgelenkt, so dass ein Wasserfluss stattfindet. Der äußere Teil 64 weist wiederum entlang seines Umfangs mit gegenseitigen Umfangsabständen angeordnete Vorsprünge 65 auf, die sich im ausgelenkten Zustand des äußeren Teils 64 auf dem Strahlzerleger 2 abstützen und durch die Zwischenräume zwischen ihnen Wasser auch zum radial inneren Bereich des Strahlzerlegers 2 hindurchtreten lassen.

In Fig. 4 ist eine Ausführungsform ähnlich Fig. 3 dargestellt, die sich nur geringfügig dadurch unterscheidet, dass die konkrete Form des Ventilkörpers etwas anders ist, aber die Aufteilung in einen Zentralbereich 62 und einen äußeren Teil 64 durch eine dazwischen angeordnete Ringnut 63 und ein Kranz von Füßen 65 ist in gleicher Weise vorhanden. In Fig. 4 ist die Schließstellung des Ventilkörpers 61 gezeigt, in welcher der äußere Teil 64 des Ventilkörpers 61 aufgrund fehlenden Strömungsdrucks des Wassers in seine Schließstellung zurückgefedert ist, in welcher der äußere Teil 64 sich mit dem Zentralbereich in einer Ebene befindet und mit seinem Umfang an der Unterseite des Vorsatzsiebs 4 dichtend anliegt.

Bei den Ausführungsformen nach den Fig. 3 und 4 wird die rückstellende Federkraft durch die Eigenelastizität des Ventilkörpers 61 bereitgestellt.

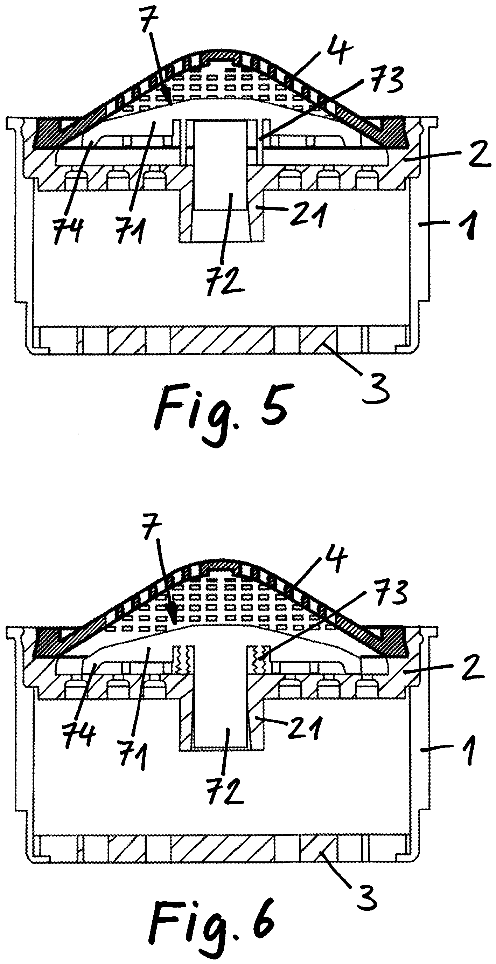

Die Fig. 5 und 6 zeigen eine weitere Ausführungsform, bei welcher ein Schließventil 7 ähnlich ausgebildet ist wie bei der ersten Ausführungsform nach den Fig. 1 und 2, nämlich mit einem Ventilkörper 71 mit einem Schaft 72, der in einer am Strahlzerleger 2 angeformten Hülse 21 axial beweglich geführt ist und daher axial beweglich relativ zum Vorsatzsieb 4 angeordnet ist.

Statt einer separaten, als Spiralfeder ausgebildeten Druckfeder zwischen dem Ventilkörper und dem Strahlzerleger, wie bei der Ausführungsform nach den Fig. 1 und 2, ist bei der Ausführungsform nach den Fig. 5 und 6 eine an der dem Strahlzerleger 2 zugewandten Unterseite angeformte Feder in Gestalt einer elastisch stauchbaren Hülse 73 angeformt. Diese ist in Fig. 5 in der Streckstellung gezeigt, in welcher der Ventilkörper 71 gegen die Unterseite des Vorsatzsiebs 4 gedrückt wird und mit seinem Umfangsbereich abdichtend an der Unterseite des Vorsatzsiebs 4 anliegt, wenn keine Wasserströmung stattfindet und deshalb kein Strömungsdruck auf den Ventilkörper 71 wirkt. Fig. 6 zeigt den Zustand bei Wasserfluss und vorhandenem Strömungsdruck des Wassers, welches den Ventilkörper 71 unter Stauchung der Federhülse 73 vom Vorsatzsieb 4 weg gegen den Strahlzerleger 2 drückt, an welchem sich der Ventilkörper 71 wiederum mit an seinem Umfang mit gegenseitigen Umfangsabständen angeordneten Vorsprüngen 74 abstützen kann.

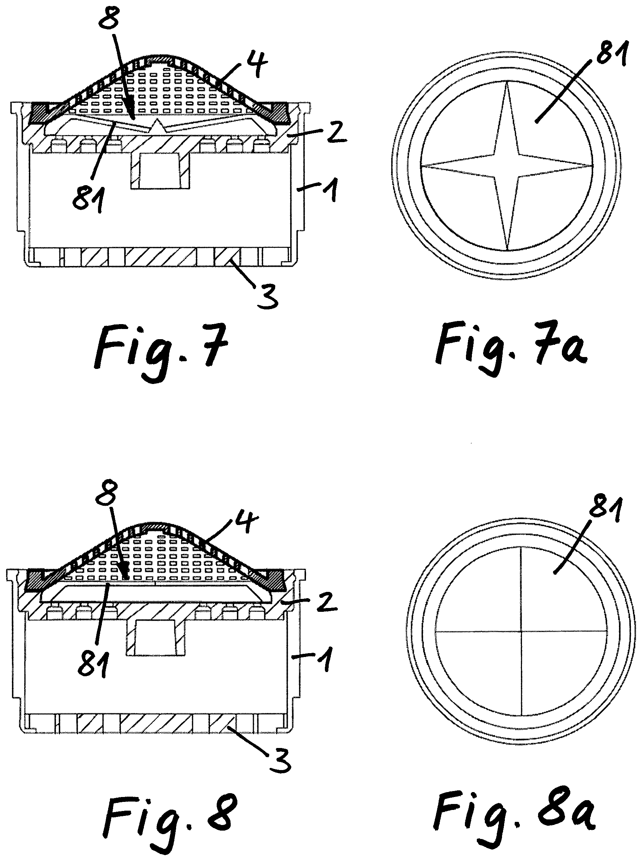

Die Fig.7 und 8 zeigen noch eine weitere Ausführungsform, bei welcher ein Schließventil 8 als Membranventil mit kreuzförmig eingeschnittener Membran 81 als Ventilkörper ausgebildet ist. Die Membran 81 ist zwischen dem Vorsatzsieb 4 unter dem Strahlzerleger 2 angeordnet und liegt mit ihrem Randteil an der Innenseite des Vorsatzsiebs 4 an.

Fig. 7 zeigt den Strahlreglereinsatz bei Wasserfluss mit durch den Fließdruck des Wassers geöffnetem Membranventil, das als Fig. 7a mit geöffneter Membran 81 daneben dargestellt ist.

Fig. 8 zeigt den Strahlreglereinsatz bei stehendem Wasser und aufgrund fehlenden Fließdrucks des Wassers geschlossenem Membranventil, das als Fig. 8a mit geschlossener Membran 81 daneben dargestellt ist.

Bei der Ausführungsform nach den Fig. 7 und 8 wird die rückstellende Federkraft durch die Eigenelastizität der Membran 81 bereitgestellt.

Das Vorsatzsieb 4 findet Anwendung, wenn der Strahlreglereinsatz bei sanitären Wasserausläufen eingesetzt wird, wo im Wasserzulauf mit Schmutzpartikeln gerechnet werden muss. Bei Anwendungen, bei denen keine Schmutzpartikel zu erwarten sind, wie beispielsweise beim Auslauf von Getränkeautomaten, ist ein Vorsatzsieb 4 nicht erforderlich und kann durch eine einfache Blendenscheibe mit einer mittigen Öffnung ersetzt sein, deren Rand mit dem Schließventil zusammenwirkt.

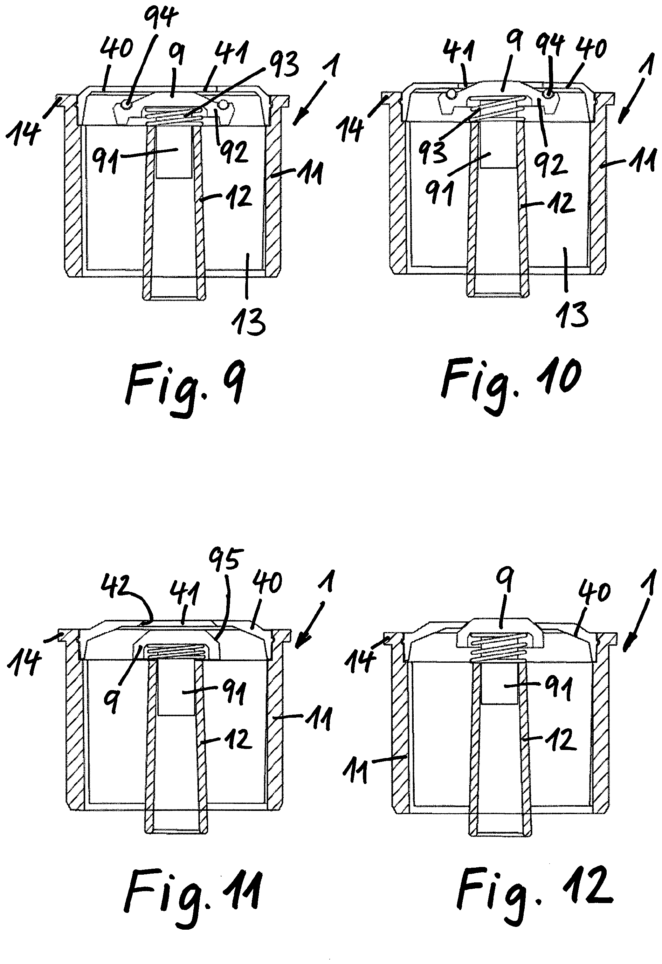

Bei den drei in den Fig. 9 bis 14 dargestellten Ausführungsbeispielen handelt es sich bei dem Strahlreglereinsatz um einen Weichstrahlereinsatz, wie er hauptsächlich am Auslauf von Getränkeautomaten eingesetzt wird. Er ist jeweils nur schematisch im Axialschnitt dargestellt. Er besteht aus einem Gehäuse 1 mit einer etwa zylindrischen Gehäuseaußenwand 11, einer rohrartigen Gehäuseinnenwand 12, die sich abwärts, also in Ausströmrichtung, leicht konisch erweitern oder zylindrisch ausgebildet sein kann, und einem Kranz von dazwischen radial verlaufenden Stegen 13, welche die Gehäuseaußenwand 11 mit der Gehäuseinnenwand 12 verbinden und dadurch einen Kranz von jeweils ringsektorförmigen parallelen Strömungskanälen zwischen sich bilden, um einen weichen Wasserstrahl zu erzeugen.

Das obere Ende der Gehäuseaußenwand 11 ist mit einem auskragenden Ringbund 14 versehen, der beim Einsetzen des Weichstrahlereinsatzes in eine Schraubhülse auf einer dort gebildeten Anschlagschulter aufliegt.

In das obere Ende des Gehäuses 1 ist eine mit einer mittigen Öffnung 41 versehene Deckwand 40 mit einer Rastverbindung eingesetzt. Diese Deckwand 40 mit ihrer mittigen Öffnung 41 bildet zusammen mit einem Ventilkörper 9 ein Schließventil zur Verschließen der Öffnung 41 der Deckwand 40, wenn ein Auslaufventil geschlossen ist und keine Strömung stattfindet.

Der Ventilkörper 9 besteht aus einem in den oberen Bereich des von der Gehäuseinnenwand 12 gebildeten Rohrs eintauchenden Schaft 91 und einem an dessen oberem Ende angeordneten Ventilteller 92. Eine den Schaft 91 zwischen dem oberen Ende des von der Gehäuseinnenwand 12 gebildeten Rohrs und dem Ventilteller 92 angeordnete Schraubendruckfeder 93 spannt den Ventilkörper 3 nach oben entgegen der Fließrichtung des Wassers durch die Öffnung 41 vor, also in Richtung zur Deckwand 40 hin und somit in Schließrichtung des Schließventils.

Bei der in den Figuren 9 und 10 gezeigten Ausführungsform ist der Ventilteller 92 an seiner oberen, der Deckwand 40 zugewandten Stirnseite mit einer Dichtfläche ausgebildet, die durch einen O-Ring 94 gebildet sein kann, die mit dem die Öffnung 41 umgebenden Flächenbereich der Unterseite der Deckwand 40 dichtend zusammen wirken kann.

Bei der in den Figuren 11 und 12 dargestellten Ausführungsform ist der Öffnungsrand der Öffnung 41 in der Deckwand 40 als konische Dichtfläche 42 ausgebildet, und der Ventilteller 92 ist mit einer komplementären Dichtfläche 95 ausgebildet, die mit der konischen Dichtfläche 42 dichtend zusammen wirken kann, welche den Öffnungsrand der Öffnung 41 bildet. Die konische Dichtfläche 42 und/oder die konische Dichtfläche 95 und kann konvex gewölbt sein, um die dichtende Berührung zwischen diesen beiden Dichtflächen linienförmige und damit besser abdichtend zu machen.

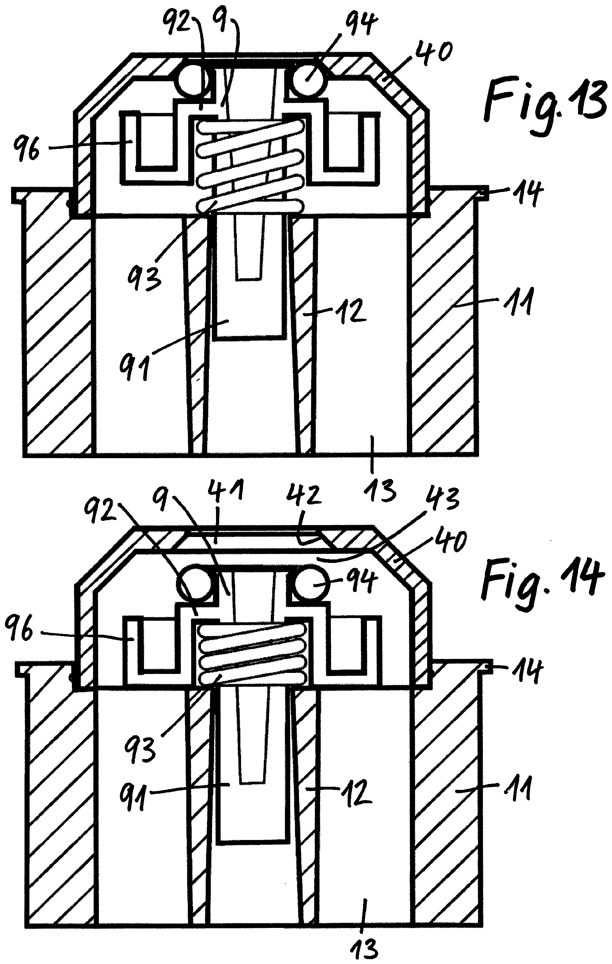

Bei der in den Figuren 13 und 14 dargestellten Ausführungsform eines Weichstrahlereinsatzes ist die Öffnung 41 in der Deckwand 40 wiederum als konische Dichtfläche 42 ausgebildet, und auf dem Ventilteller 92 sitzt ein O-Ring 94, der mit der Dichtfläche 42 dichtend zusammenwirkt.

Eine Besonderheit bei der Ausführungsform nach den Figuren 13 und 14 besteht in einem mit dem Ventilteller 92 des Ventilkörpers 9 integrierten Entspannungtopf 96, der sich radial außen an den eigentlichen Ventilteller 92 anschließt.

Um ein schöneres und ruhigeres Wasserstrahlbild zu erhalten, müssen die Wassergeschwindigkeit und der Wasserdruck gedrosselt werden, die dadurch entstehen, dass das vor dem Weichstrahlereinsatz zuströmende Wasser durch den kleinen Spalt 43 zwischen der Dichtfläche 42 und dem O-Ring 94 hindurchströmen muss, wodurch sich aufgrund der Querschnittsverengung Druck und Strömungsgeschwindigkeit der Wasserströmung stark erhöhen. Um diesen Druck zu entspannen und die Strömungsgeschwindigkeit zu drosseln, ist der Entspannungtopf 96 vorgesehen, der als ringförmiger Auffangbehälter wirkt und den hohen Druck abbaut und die Strömungsgeschwindigkeit bremst, so dass das Wasser mit einer geringeren Fließgeschwindigkeit durch den Weichstrahler strömt. Hierdurch wird das Strahlbild ruhig und homogen.

Die Schraubendruckfeder 93 ist so bemessen, dass bei Öffnung eines Wasserauslaufventils der Strömungsdruck des Wassers den Ventilteller 92 des Ventilkörpers 9 von der entsprechenden Dichtfläche der Deckwand 40 wegdrückt und damit das Schließventil öffnet, wohingegen bei geschlossenem Wasserauslaufventil und infolgedessen stehendem Wasser und fehlendem Fließdruck die Schraubendruckfeder 93 den Ventilteller 92 in die Schließstellung des Schließventils drückt, in welcher die Dichtflächen des Ventiltellers 92 und der Deckwand 40 dichtend miteinander zusammenwirken.

Es versteht sich, dass die einzelnen Merkmale der beschriebenen Ausführungsbeispiele nicht nur in der in den einzelnen Ausführungsbeispielen vorhandenen Kombinationen der einzelnen Merkmale Anwendung finden können, sondern auch in anderen Kombinationen, die Merkmale aus den verschiedenen Ausführungsbeispielen, gegebenenfalls zusammen mit weiteren Merkmalen, die sich in den Ausführungsbeispielen nicht finden, benutzt werden können.

## Patentansprüche

1. Strahlreglereinsatz zum Einsetzen in ein als Einschraubhülse oder Aufschraubhülse ausgebildetes Auslaufmundstück für einen sanitären Wasserauslauf oder den Auslauf eines Wasser/Getränkespenders, mit einem Gehäuse (1) und darin angeordneten Komponenten zur Regelung des austretenden Wasser- oder Flüssigkeitsstrahls, **gekennzeichnet durch** einen Rückverkeimungsschutz in Gestalt eines Schließventils, das zwischen einem Vorsatzsieb (4) oder einer mit einer mittigen Öffnung (42) versehenen Deckwand (40) und einem darunter befindlichen Bauteil des Strahlreglereinsatzes angeordnet ist und einen Ventilkörper (51, 61, 71, 81, 9) aufweist, der mittels Federkraft entgegen der Strömungsrichtung des Wassers oder der Flüssigkeit in eine Schließstellung vorgespannt ist, in welcher er bei fehlendem Strömungsdruck des Wassers oder der Flüssigkeit mit einem umfangsmäßigen Randbereich abdichtend an einem nicht mit Sieböffnungen versehenen Randbereich des Vorsatzsiebs (4) oder dem Öffnungsrand der Deckwand (40) anliegt, und der bei vorhandenem Strömungsdruck des Wassers oder der Flüssigkeit entgegen der vorspannenden Federkraft vom Vorsatzsieb (4) oder der Deckwand (40) weg in eine Offenstellung auslenkbar ist.

2. Strahlreglereinsatz nach Anspruch 1, wobei der Ventilkörper (51, 71, 9) einen axial geführten Schaft (52, 72, 91) und einen daran angeordneten Ventilteller aufweist, der mit dem Vorsatzsieb (4) oder der Deckwand (40) zusammenwirkt.

3. Strahlreglereinsatz nach Anspruch 2, wobei der Ventilkörper (51, 9) mittels einer den Schaft (52, 72, 91) umgebenden Druckfeder (53, 73, 93) in die Schließstellung vorgespannt wird.

4. Strahlreglereinsatz nach Anspruch 2, wobei die Druckfeder eine Spiralfeder (53, 93) oder eine am Ventilkörper (71) angeformte, elastisch stauchbare Hülse (73) ist.

5. Strahlreglereinsatz nach Anspruch 1, wobei der Ventilkörper (61) aus einem unbeweglichen Zentralbereich (64) und einem davon durch eine diesen umgebende Ringnut (63) getrennten radial äußeren Teil (64) besteht, wobei die Ringnut (63) eine als elastisches Gelenk wirkende Querschnittsverringerung bildet, um welche der äußere Teil (64) relativ zum Zentralbereich (62) unter der Wirkung eines Strömungsdrucks vom Vorsatzsieb (4) oder der Deckwand (40) weg auslenken kann.

6. Strahlreglereinsatz nach einem der Ansprüche 1 bis 5, wobei der Ventilkörper (51, 9) an seinem radial äußeren Randbereich einen mit dem Vorsatzsieb (4) oder dem Öffnungsrand der Deckwand (40) zusammenwirkenden Dichtungsring (54, 94) aufweist.

7. Strahlreglereinsatz nach einem der Ansprüche 1 bis 6, wobei der Ventilkörper (51, 61 71) an seinem radial äußeren Randbereich einen Kranz von einem darunter befindlichen Bauteil zugewandten, mit gegenseitigen Umfangsabständen angeordneten und als Strömungsöffnungen dienende Zwischenräume zwischen sich frei lassenden Vorsprüngen (55, 65, 74) aufweist, die sich bei Auslenkung des Ventilkörpers in die Offenstellung auf dem darunter befindlichen Bauteil abstützen können.

8. Strahlreglereinsatz nach einem der Ansprüche 1 bis 7, wobei der Öffnungsrand (42) der Durchtrittsöffnung (41) der Deckwand (40) als Konusfläche ausgebildet ist und mit einer am Ventilkörper (92) angeordneten Konusfläche (95) oder einem an seinem radial äußeren Randbereich angeordneten Dichtungsring (94) konisch dichtend zusammenwirkt.

9. Strahlreglereinsatz nach Anspruch 8, wobei mindestens eine der konisch dichtend zusammenwirkenden Konusflächen (42, 95) eine konvexe Wölbung aufweist.

10. Strahlreglereinsatz nach einem der Ansprüche 1 bis 9, wobei sich radial außen an den Ventilteller ein Entspannungstopf (96) anschließt, der einen ringförmigen Auffangbehälter bildet, in dem bei geöffnetem Schließventil in den Strahlreglereinsatz einströmendes Wasser oder einströmende Flüssigkeit aufgefangen wird, um den Strömungsdruck abzubauen und die Strömungsgeschwindigkeit zu reduzieren.

11. Strahlreglereinsatz zum Einsetzen in ein als Einschraubhülse oder Aufschraubhülse ausgebildetes Auslaufmundstück für einen sanitären Wasserauslauf oder den Auslauf eines Wasser/Getränkespenders, mit einem Gehäuse (1) und darin angeordneten Komponenten zur Regelung des austretenden Wasser- oder Flüssigkeitsstrahls, **gekennzeichnet durch** einen Rückverkeimungsschutz in Gestalt eines Schließventils, das zwischen einem Vorsatzsieb (4) oder einer mit einer mittigen Öffnung (42) versehenen Deckwand (40) und einem darunter befindlichen Bauteil des Strahlreglereinsatzes angeordnet ist, und das als Membranventil mit einer im Mittenbereich geschlitzten Membran (81) als Ventilkörper ausgebildet ist, wobei die Membran (81) mit ihrem Randbereich an der Innenseite eines nicht mit Sieböffnungen versehenen Randbereich des Vorsatzsiebs (4) oder der Deckwand (40) anliegt und im geschlitzten Bereich elastisch in eine Öffnungsstellung auslenkbar ist.
